Europäisches Patentamt

European Patent Office

Office européen des brevets

(11) Publication number: 0 373 702
A1

# EUROPEAN PATENT APPLICATION

(21) Application number: 89203113.9

(22) Date of filing: 08.12.89

(51) Int. Cl.⁵: B60P 1/46

(30) Priority: 12.12.88 BE 8801393

(43) Date of publication of application:
20.06.90 Bulletin 90/25

(84) Designated Contracting States:
AT BE CH DE ES FR GB GR IT LI LU NL SE

(71) Applicant: SOLID b.v.b.a.
Steenweg op Mol 175
B-2360 Oud-Turnhout(BE)

(72) Inventor: Nuyts, Henry Catherina
Steenweg op Mol 173
B-2360 Oud-Turnhout(BE)
Inventor: Nuyts, Karolus Maria Leopoldus
Steenweg op Mol 175
B-2360 Oud-Turnhout(BE)

(74) Representative: Lips, Hendrik Jan George, Ir.
et al
HAAGSCH OCTROOIBUREAU Breitnerlaan
146
NL-2596 HG Den Haag(NL)

(54) Loading lift construction for mounting to a lorry, a trailer or such like.

(57) Loading lift construction for mounting to a lorry (1), a trailer or such like, said loading lift construction (9) being provided with rollers or sliding elements cooperating with tracks (21,25,26) running in mainly horizontal directions along the back wall (5) and at least one side wall (6) of the cargo space (3) of the lorry (1). The track running along the back wall (5) being executed as at least one swinging arm (21,26) which is supported by a pivot (22) positioned near the edge between the back wall (5) and the side wall such that the loading lift construction (9) can be moved from said swinging arm (21,26) onto the track section (25) present on the side wall (6) and vice versa when the swinging arm (21,26) is pivoted over 90° from its position in which it is running parallel to the back wall (5) of the lorry (1). Locking means (23) being present to lock the swinging arm (21,26) in various positions and to lock the loading lift construction (9) in respect of the tracks (21,25,26) and of the lorry (1).

FIG. 1

## Loading lift construction for mounting to a lorry, a trailer or such like.

The invention relates to a loading lift construction for mounting to a lorry, a trailer or such like. For the sake of simplicity in the description there will be spoken of a lorry, it being obvious that the invention can also be used in case of trailers or other vehicles.

The known loading lift constructions are always mounted to the back wall of a lorry so that they can only be used for loading or unloading of articles through the opening in said back wall. Now there are lorries having also a door or opening in at least one of the side walls. In view of the width of a loading lift construction no such construction will be mounted near said opening. This brings with it that for loading and unloading the compartment present near said opening other means will have to be used such as a fork-lift truck. So such a fork-lift truck will have to be present at the place of loading or unloading, either it will have to be carried with it by the lorry which will require additional provisions.

Now the invention aims to remove these disadvantages and to that end the loading lift construction is provided with rollers or sliding elements cooperation with guiding means such that the loading lift construction can be moved from a position parallel to the back wall of the lorry to a position parallel to a side wall of this, locking means being present to lock the loading lift construction in various positions in which it either can be used or is present at the back wall of the lorry when this has to be moved.

So when the lorry is driving the loading lift construction is fixedly connected to the back wall of the lorry and only at the place of loading or unloading the loading lift construction can be brought into a position near the side wall at the position of an opening in this.

In particular the loading lift construction will comprise a framework consisting of two spaced vertical beams and at least one horizontal connecting beam which is provided with said rollers or sliding elements.

Obviously the framework or elements thereof may form part of the normal used loading lift construction.

According to an embodiment of the invention the guiding means mounted to the lorry comprises C-shaped guiding tracks in which the rollers or sliding elements connected to the framework are received such that they can substantially move only in longitudinal direction within said tracks, at least one section of said tracks being executed as a swinging arm which is mounted on a pivot connected to said lorry near the edge between the back wall and a side wall of it, such that said swinging arm can be pivoted in a mainly horizontal plane from a position parallel to the back wall towards a position parallel to the side wall in which it can be in line with a track section mounted to the side wall of said lorry.

So in the position of non-use the loading lift construction is brought in the normal position parallel to the back wall of the lorry, in which position it can be used for loading and unloading of the lorry in the normal way. When now the loading lift has to be used near the opening in a side wall of the lorry the swinging arm, after being unlocked, will be pivoted over an angle of 90°, after which the rollers or slide elements of the loading lift construction can be brought into the guiding track running along the side wall of the lorry.

If it is wanted that the loading lift construction can be used at both side walls of the lorry, it will be provided that near both edges between the back wall and the two side walls of the lorry, a swinging arm is pivotally mounted, such that each arm extends over about half the width of the back wall and that the two swinging arms can be brought in line with each other for together supporting said loading lift construction.

When now the loading lift construction has to be used near one of said side walls, the loading lift construction will be moved along the related swinging arm and outwardly in respect of said side wall till it is free from the other swinging arm. Then the swinging arm by which the loading lift construction is supported can be unlocked and can be pivoted over 90° such that the loading lift construction can be moved onto the guiding track present along the related side wall. To make this possible the last mentioned guiding track may end at a distance from the pivot of the related swinging arm. It being possible, however, that the related guiding track extends itself till near said pivot, but then it is necessary to move the loading lift construction, after some rotation of the related swinging arm, back to its original position on this arm so that then after further pivoting of the swinging arm the loading lift construction can be moved onto the guiding track along the side wall of the lorry.

According to a preferred embodiment the guiding tracks are mounted near the upper rim of the back wall and of the side wall(s) of the lorry.

This will require a structural stiffness of the body work of the lorry. If this is not present the guiding tracks can be mounted near the lower rim of the back wall and of the side wall.

In case of heavy loading lift constructions it is also possible that guiding tracks are mounted as well near the upper edge as near the lower edge of the back wall and of the side wall(s) of the lorry.

According to an embodiment of the invention the pivot of the swinging arm is connected to the lorry in such a way that it is movable in vertical direction, in the highest position of said pivot, the swinging arm being free to be pivotably moved while by lowering it the loading lift construction can be brought into a locked position parallel to the back wall of the lorry.

To have the loading lift construction locked in the last mentioned position the lower end of the framework of it can be provided with at least one vertically running pin which can be received in a cooperating part connected to said lorry.

The construction can be executed such. that after having pivoted the swinging arm to a position parallel to the side wall of the lorry the pivot can be lowered to bring the swinging arm in a position in which it is in line with the guiding track extending along the side wall of the lorry and is simultaneously locked in this position. After having reached this position the loading lift construction can be moved along said guiding track.

According to an embodiment it can be provided that of the guiding track, mounted to the side wall, the end adjacent the pivot of the swinging arm is executed such that the rollers or sliding elements connected to the loading lift construction are brought downwardly into said track section when lowering the pivot of said swinging arm.

In particular this will be done when two swinging arms are provided so that the loading lift construction, after lifting the pivots of the swinging arms, will first be moved outwardly till it is free from the one swinging arm so that then the swinging arm, by which it is supported, can be pivoted over 90°.

Generally speaking it is possible to move the loading lift construction manually along the guiding tracks. In case of heavy constructions it will be preferred that a chain, a motoric drive or such like is used for moving the loading lift construction along the tracks.

The invention is described by means of embodiments shown in the drawing, in which:

Fig. 1 shows a side view of a part of a lorry provided with a loading lift construction according to the present invention;

Fig. 2 shows a rear view of a lorry provided with a first embodiment of a loading lift construction according to the present invention;

Fig. 3 shows a top view of the lorry of Fig. 2;

Fig. 4 shows a top view according to Fig. 3 but with the swinging arm and the loading lift construction in another position;

Fig. 5 shows a top view according to Fig. 4 but with the loading lift construction near the side wall of the lorry;

Fig. 6 shows a rear view of Fig. 5;

Fig. 7 shows a detail, partly in cross-section, encircled in Fig. 1;

Fig. 8 shows a rear view corresponding with Fig. 2 but with another embodiment of the loading lift construction;

Fig. 9 shows a top view of the embodiment of Fig. 8;

Fig. 10 shows a top view according to Fig. 9 but with the loading lift construction shifted outwardly;

Fig. 11 shows a rear view of Fig. 10;

Fig. 12 shows a plan view according to Fig. 10 but with the swinging arm and the loading lift construction pivoted over 90°;

Fig. 13 shows a side view of Fig. 12 with the loading lift construction moved to a place beside the side wall of the lorry;

Fig. 14 shows a rear view of Fig. 13;

Fig. 15 shows a rear view of an embodiment of the loading lift construction in which the pivots for the swinging arms are movable in vertical direction;

Fig. 16 shows a side view of Fig. 15;

Fig. 17 shows a rear view according to Fig. 15 but with the loading lift construction in a position parallel to a side wall of the lorry;

Fig. 18 shows a side view of another embodiment of a loading lift construction according to the invention;

Fig. 19 shows a rear view of the construction of Fig. 18 but with the loading lift construction in a position parallel to a side wall of a lorry;

Fig. 20 shows a side view of still another embodiment of the loading lift construction according to the invention; and

Fig. 21 shows a rear view of the construction according to Fig. 20, but with the loading lift construction in a position parallel to a side wall of a lorry.

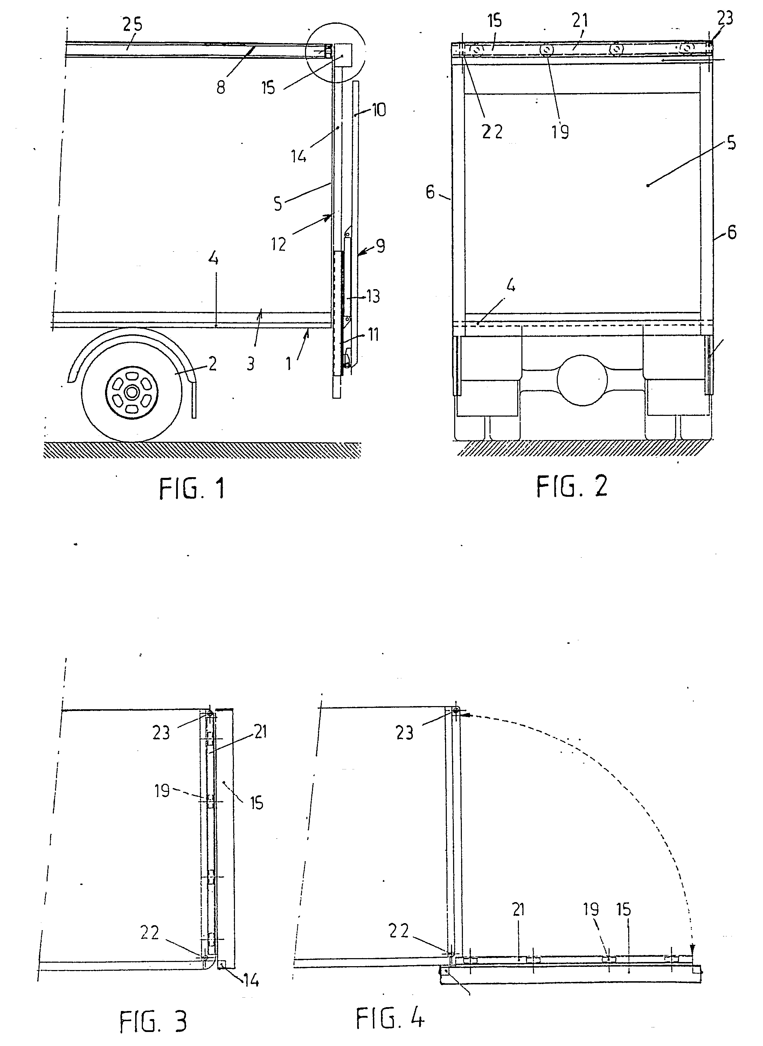

In the various Figures of the drawing corresponding parts are indicated with the same reference numbers. The Figs. 1 - 6 concern a first embodiment of a loading lift construction according to the invention.

These Figures show a part of a lorry 1 and in particular the wheel set 2 with a part of the body construction, in particular the cargo space 3. This cargo space 3 comprises the floor 4, the back wall 5, the side walls 6, the front wall 7 and the top wall 8.

The lorry 1 is provided with a loading lift construction 9 comprising a loading flap 10 being hingedly connected to an element 11 which is supported by the framework 12 such that said element is movable in vertical direction. Between the element 11 and the loading flap 10 at least one hydraulic cylinder 13 is provided by means of which the loading flap can be pivoted to the horizontal position. Such a loading lift is known per se so that a further description of it is thought to be superfluous.

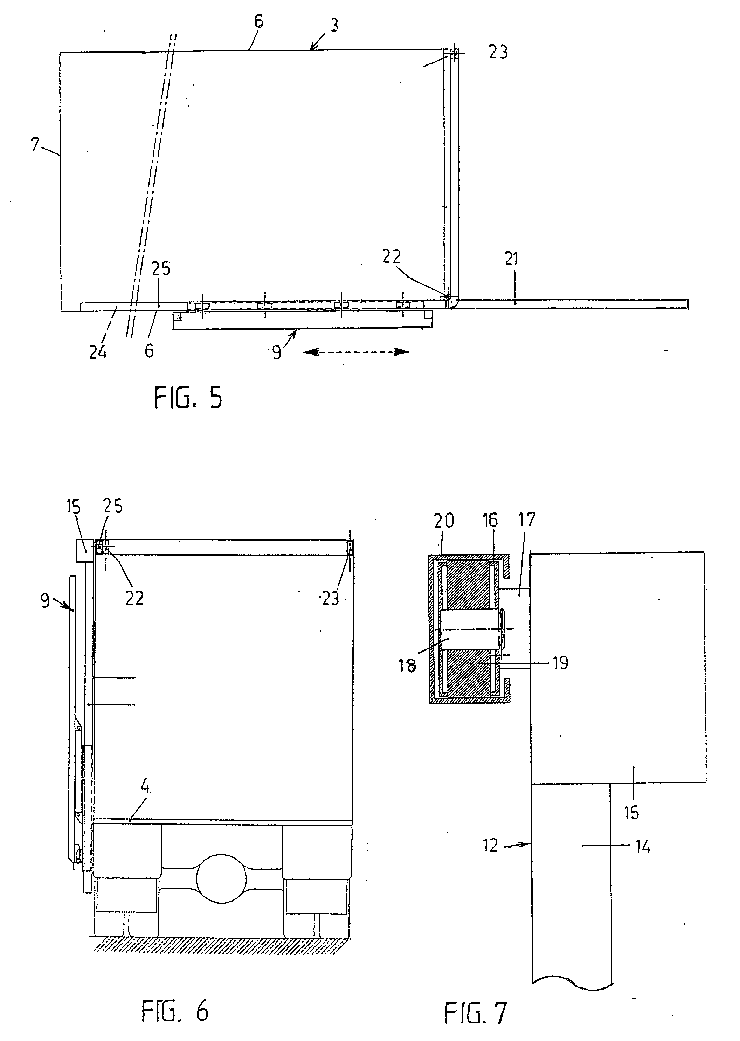

The framework 12 comprises two vertical beams 14 being connected by at least one horizontal connecting beam 15. As in particular appears from Fig. 7 the beam 15 is connected to a support beam 16 by means of a number of studs 17. The support beam 16 is provided with a number of shafts 18 on each of which a roll 19 is mounted. The support beam 16 and the rolls 19 can be received in tracks 20.

In case of the embodiment according to the Figs. 1 - 6 a section of the tracks 20 is executed as a swinging arm 21, being pivotally mounted by means of a pivot 22 which is connected to the construction of the cargo space in a not further indicated way.

The end of the swinging arm 21, spaced from the pivot 22, can be locked, e.g. by means of a pin 23 such that said end is fixedly connected to the cargo space construction.

In the position of the loading lift construction 9 indicated in the Figs. 1 - 3 the loading lift construction can be used for loading or unloading of articles or the lorry can be driven to another place.

When the one side wall 6 of the cargo space 3 is provided with an opening 24, as this is indicated in Fig. 5, after unlocking the pin 23 the swinging arm 21 can be pivoted to the position as shown in Fig. 5 and then the loading lift construction 9 can be moved along the swinging arm 21 and the track section 25 extending along the side wall 6. In this way the loading lift construction 9 can be brought before the opening 24 and can be locked in this position by means not shown.

After having been used the loading lift construction will be moved along the track section 25 onto the swinging arm 21. After having been locked on this arm, by means not shown, the arm can be pivoted back to its original position and will be locked by means of the pin 23.

The Figs. 3 - 6 show the various positions of the swinging arm 21 and of the loading lift construction 9.

It will be obvious that the locking pin 23 can be manually operated or can be connected to a hydraulic cylinder or such like. Also other locking means can be used as these are generally known.

Obviously the construction described above can be used when only one of the side walls 6 of the cargo space 3 is provided with an opening. It might be possible to execute the swinging arm 21 in such a way that it is pivotably mounted near one side wall or the other, but this will bring a complicated construction with it.

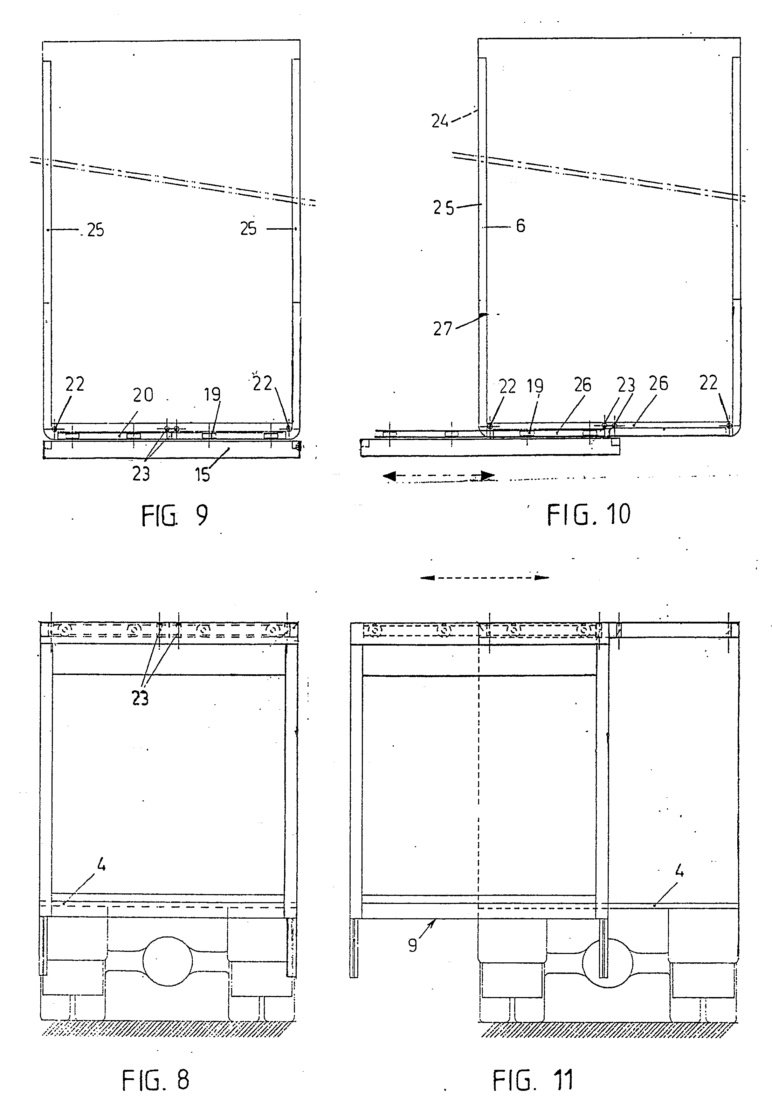

In view of this the Figs. 9 - 13 show a construction in which two swinging arms 26 are used which each are pivotally mounted by means of a pivot 22 near a side wall 6 and each having a length which is about half the width of the back wall 5 of the cargo space 3. The free ends of the swinging arms 26 are again locked by means of pins 23 which now are provided about in the middle of the top wall 8.

The Figs. 8 and 9 show the situation when the loading lift construction 9 is positioned near the back wall 5 so that it can be used there or the lorry can be driven.

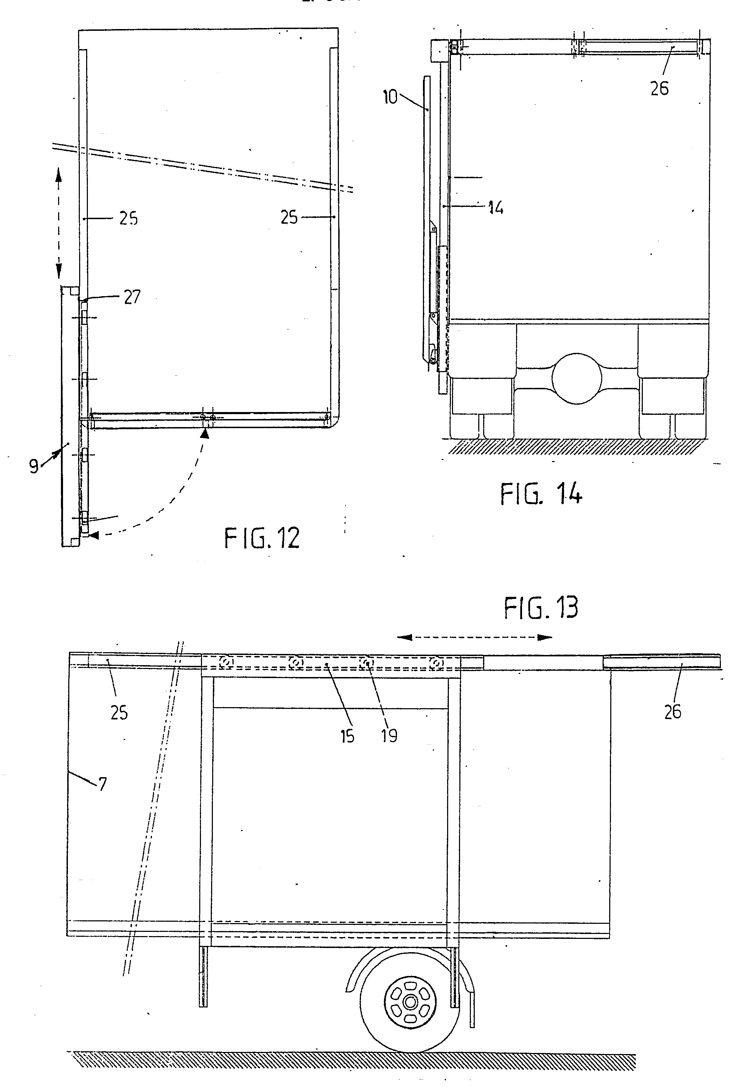

When now the loading lift construction 9 has to be brought near an opening 24 in a side wall 6 of the cargo space 3 the loading lift construction is unlocked and is moved towards the position shown in the Figs. 10 and 11. Then the related swinging arm 26 is unlocked and is pivoted over 90° to the position shown in Fig. 12. Then the loading lift construction 9 can be moved along the track 25 connected to the side wall 6 and can be brought before the opening 24 to be used there. Figs. 13 and 14 show the movement of the loading lift construction 9 along the related side wall.

It will be clear that in this case the inwardly bent rims of the track section 25 will have to be removed over that part lying near the back wall 5 of the cargo space 3, to make it possible that the support beam 16 together with the rolls 19 are brought into said track section 25. So said rims will have to be removed about till the place indicated with 27 in Figs. 10 and 12.

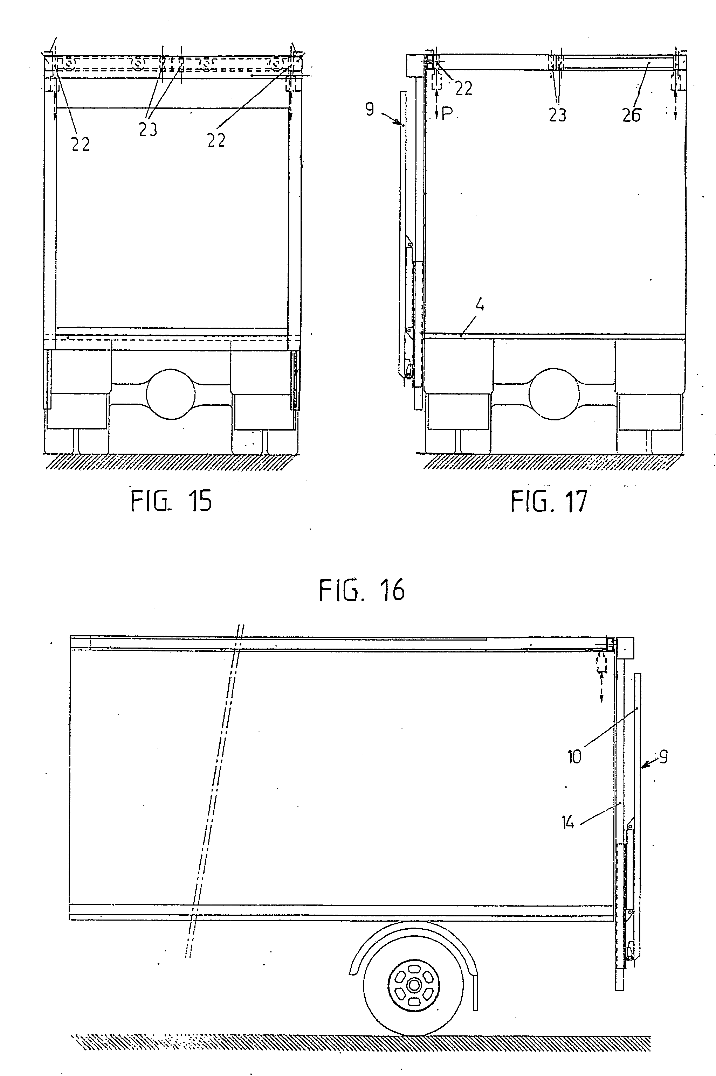

The Figs. 15 - 17 show an embodiment substantially corresponding with the embodiment shown in the Figs. 9 - 13. In this modified embodiment, however, the pivots 22 are mounted in such a way that they are movable in vertical direction, as indicated by means of the arrow P in Fig. 17.

The vertical displacement can be obtained by means of hydraulic cylinders or in a mechanical way.

When the loading lift construction 9 is in its position near the back wall 5 of the cargo space 3 and the pivots 22 are in their lowest position, the loading lift construction 9 will be locked by not further indicated means. When the pivots 22 are moved upwardly, the locking means of the loading lift construction 9 will be released so that the loading lift construction 9 can be moved along the swinging arms 26 to a position as this is shown in Fig. 10. Then the swinging arm 26 can be pivoted around the pivot 22 to a position in which the loading lift construction 9 is parallel to a side wall 6 of the cargo space 3. Then the pivot 22 can be lowered and when doing this the support beam 16 with the rolls 19 will come to lie in line with the track section 25. In this case the upper horizontal leg and the vertical rim extending from it will have to removed till the point 27. The upwardly extending rim of the lower leg of the track can be maintained.

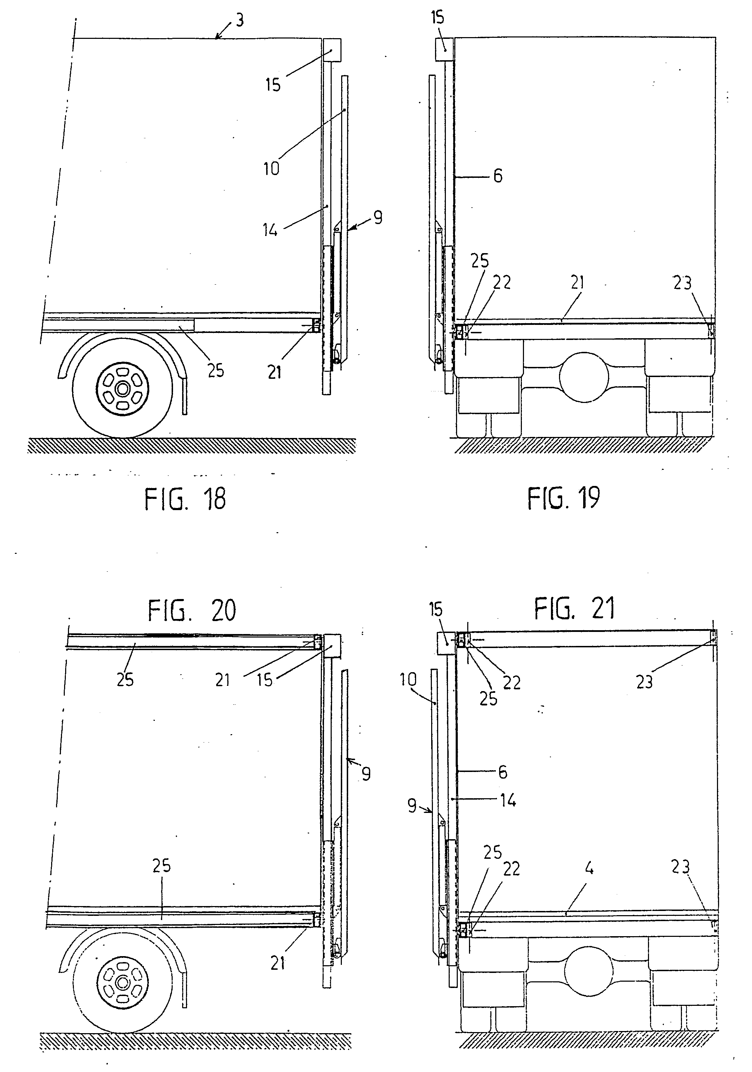

The Figs. 18 and 19 show a modified embodiment in which the pivot 22 for the swinging arm 21 is mounted at the lower side of the cargo space 3 so to the floor construction of the lorry. Obviously the track 25 along the side wall is also mounted to the floor 4.

The Figs. 20 and 21 show another modified embodiment in which pivots 22 for swinging arms 21 and locking means 23 are present as well at the upper as the lower end of the back wall 5 of the lorry so that the loading lift construction 9 is supported by two spaced arms and of course by two track sections 25 present at the upper and the lower longitudinal rim of the side wall or side walls 6. Obviously two swinging arms 26 can be used as this was described above for the embodiment according to the Figs. 9 - 13.

Although various embodiments of the construction according to the invention are shown in the drawings and are described above, it will be obvious that the features of various embodiments can be combined and that many other modifications can be applied without leaving the inventive concept.

## Claims

1. Loading lift construction for mounting to a lorry, a trailer or such like,
characterized in
that the loading lift construction (9) is provided with rollers (19) or sliding elements cooperating with guiding means (21,25,26) such that the loading lift construction (9) can be moved from a position parallel to the back wall (5) of the lorry (1) to a position parallel to a side wall (6) of this, locking means (23) being present to lock the loading lift construction (9) in various positions in which it either can be used or is present at the back wall (5) of the lorry (1) when this has to be moved.

2. Loading lift construction according to claim 1,
characterized in
that it comprises a framework (12) consisting of two spaced vertical beams (14) and at least one horizontal connecting beam (15) which is provided with said rollers (19) or sliding elements.

3. Loading lift construction according to claim 2,
characterized in
that the guiding means mounted to the lorry (1) comprises C-shaped guiding tracks (21,25,26) in which the rollers (19) or sliding elements connected to the framework (12) are received such that they can substantially move only in longitudinal direction within said tracks (21,25,26), at least one section of said tracks being executed as a swinging arm (21, 26) which is mounted on a pivot (22) connected to said lorry (1) near the edge between the back wall (5) and a side wall (6) of it, such that said swinging arm (21,26) can be pivoted in a mainly horizontal plane from a position parallel to the back wall (5) towards a position parallel to the side wall (6) in which it can be in line with a track section (25) mounted to the side wall (6) of said lorry.

4. Loading lift construction according to claim 3,
characterized in
that near both edges between the back wall (5) and the two side walls (6) of the lorry (1) a swinging arm (26) is pivotally mounted, such that each arm (26) extends over about half the width of the back wall (5) and that the two swinging arms (26) can be brought in line with each other for together supporting said loading lift construction (9).

5. Loading lift construction according to one of the preceding claims,
characterized in
that the guiding tracks (21,25,26) are mounted near the upper rim of the back wall (5) and of the side wall(s) (6) of the lorry (1).

6. Loading lift construction according to one of the claims 1 - 4,
characterized in
that guiding tracks (21,25,26) are mounted as well near the upper edge as near the lower edge of the back wall (5) and of the side wall(s) (6) of the lorry (1).

7. Loading lift construction according to one of the preceding claims,
characterized in
that the pivot (22) of a swinging arm (21,26) is connected to the lorry (1) in such a way that it is movable in vertical direction, in the highest position of said pivot (22) the swinging arm (21,26) being free to be pivotably moved while by lowering it the loading lift construction (9) can be brought into a locked position parallel to the back wall (5) of the lorry (1).

8. Loading lift construction according to claim 7,
characterized in
that the construction is executed such that after having pivoted the swinging arm (21,26) to a position parallel to a side wall (6) of the lorry (1) the pivot (22) can be lowered to bring the swinging arm (21,26) in a position in which it is in line with the guiding track (25) extending along the side wall (6) of the lorry (1) and is simultaneously locked in this position.

9. Loading lift construction according to claim 7 or 8,
characterized in
that of the guiding track (25), mounted a side wall (6), the end adjacent the pivot (22) of the swinging arm (21,26) is executed such that the rollers (19) or sliding elements connected to the loading lift construction (9) are brought downwardly into said track section (25) when lowering the pivot (22) of said swinging arm (21,26).

10. Loading lift construction according to one of the preceding claims,
characterized in
that a chain, a motoric drive or such like is present for moving the loading lift construction (9) along the tracks (21,25,26).

FIG. 1

FIG. 2

FIG. 3

FIG. 4

FIG. 5

FIG. 6

FIG. 7

Solid b.v.b.a., OUD-TURNHOUT, Belgium

FIG. 9

FIG. 10

FIG. 8

FIG. 11

Solid b.v.b.a., OUD-TURNHOUT, Belgium

FIG. 12

FIG. 14

FIG. 13

Solid b.v.b.a., OUD-TURNHOUT, Belgium

FIG. 15

FIG. 17

FIG. 16

Solid b.v.b.a., OUD-TURNHOUT, Belgium

FIG. 18

FIG. 19

FIG. 20

FIG. 21

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 971 483 (W. WEBER) <br> * whole document * <br> --- | 1,5,6, 10 | B 60 P   1/46 |
| X | DE-B-1 950 652 (RATIONORM AG) <br> * figures 1-8 * <br> --- | 1,3,4 | |
| X | US-A-3 794 193 (W. O. FLEENOR) <br> * figures 2-4,14 * | 6,10 | |
| Y | --- | 2 | |
| Y | GB-A-1 602 454 (PARKWOOD ENGINEERING CO. LTD.) <br> * figure 1 * <br> ----- | 2 | |
| | | | TECHNICAL FIELDS SEARCHED (Int. Cl.5) |
| | | | B 60 P |

The present search report has been drawn up for all claims

| Place of search | Date of completion of the search | Examiner |
|---|---|---|
| BERLIN | 28-02-1990 | LUDWIG H J |

EPO FORM 1503 03.82 (P0401)